**Europäisches Patentamt**

**European Patent Office**

**Office européen des brevets**

(11) Veröffentlichungsnummer: **0 557 605 B1**

(12) **EUROPÄISCHE PATENTSCHRIFT**

(45) Veröffentlichungstag der Patentschrift: **15.11.95**

(21) Anmeldenummer: **92121045.6**

(22) Anmeldetag: **10.12.92**

(51) Int. Cl.⁶: **F16D 69/02**

(54) **Eisenbahnbremsbelag und Verfahren zu seiner Herstellung.**

(30) Priorität: **25.02.92 DE 4205646**

(43) Veröffentlichungstag der Anmeldung:
**01.09.93 Patentblatt 93/35**

(45) Bekanntmachung des Hinweises auf die
Patenterteilung:
**15.11.95 Patentblatt 95/46**

(84) Benannte Vertragsstaaten:
**AT BE CH DE DK ES FR GB GR IT LI LU NL PT SE**

(56) Entgegenhaltungen:

**DATABASE WPIL Week 8747, Derwent Publications Ltd., London, GB; AN 87-331386, & JP-A-62 237126 (TAIHO KOGYO CO LTD) 17 Oktober 1987**

**PATENT ABSTRACTS OF JAPAN vol. 15, no. 289 (C-852)23. Juli 1991 & JP-A-31 03 487 (SUMITOMO ELECTRIC IND LTD) 30 April 1991**

**DATABASE WPIL Week 8941, Derwent Publications Ltd., London, GB; AN 89-295431, & JP-A-1 216 135 (TOYOTA JIDOSHA KK) 30. August 1989**

**DATABASE WPIL Week 8612, Derwent Publications Ltd., London, GB; AN 86-076913, & EP-A-0174474 (SUMITOMO ELECTRIC IND KK) 19 März 1986**

(73) Patentinhaber: **RÜTGERS PAGID AKTIENGESELLSCHAFT**
**Westuferstrasse 7**
**D-45356 Essen (DE)**

(72) Erfinder: **Bugaj, Richard**
**Freiligrathstrasse 2**
**W-4250 Bottrop 2 (DE)**
Erfinder: **Lloyd, Herbert**
**82 Smith Hill Road**
**Monsey,**
**New York, 10952 (US)**

**Beschreibung**

Die Erfindung betrifft Eisenbahnbremsbeläge mit verbesserten Reibwerten bei Nässe und ein Verfahren zur Herstellung solcher Beläge.

Es ist bekannt, daß ein Wasserfilm zwischen mit einer hohen Relativgeschwindigkeit zueinander bewegten Gegenständen deren Reibwert vermindert. Bei der Kombination Rad-Straße wird dieser Effekt "Aquaplaning" und bei Bremsen "Naßfading" genannt. Naßfading tritt vor allem bei Eisenbahnscheibenbremsen auf.

In der UIC-Prüfnorm 541-3 VE ist vorgeschrieben, daß der Reibwert bei der Naßbremsung bei einer Geschwindigkeit von 200 km/h nicht geringer als $\mu$ = 0,25 sein soll. Um diese Bedingung zu erfüllen, ist es üblich den Reibbelag mit Nuten zu versehen, die ein Abfließen des Wassers aus dem Spalt zwischen Reibbelag und Bremsscheibe erleichtern sollen. Diese Maßnahme ist jedoch nur in Ausnahmefällen hinreichend wirksam.

In einer älteren Patentanmeldung (P 41 35 389.7) wird daher vorgeschlagen, als anorganischen Füllstoff neben anderen Alkaliphosphate zu verwenden und als Bindemittel eine Kombination aus einem Nitrilkautschuk und einem mit Peroxiden vernetzten Polybutadien-Flüssigharz. Durch die veränderte Zusammensetzung der Reibbelagmischung wird bei organisch gebundenen Belägen der Reibwert bei der Naßbremsung deutlich verbessert, vor allem wenn ein Gemisch aus kristallwasserhaltigem und kristallwasserfreiem Trinatriumphosphat verwendet wird. Die Maßnahme ist jedoch nicht auf alle Bremsbeläge übertragbar, nicht einmal auf Beläge, die mit einem anderen Bindemittel hergestellt werden.

Es bestand daher die Aufgabe, Maßnahmen zu erarbeiten, die das Naßfading bei den unterschiedlichsten Reibwerkstoffen für Eisenbahnbremsbelägen wirksam vermindern, und entsprechende Beläge zu entwickeln.

Die Aufgabe wird erfindungsgemäß durch einen Eisenbahnbremsbelag gelöst, dessen poröser Reibwerkstoff mit einem wasserabweisenden, temperaturbeständigem Öl so imprägniert ist, daß 60 bis 90 Vol.-% der Poren mit Öl gefüllt sind.

Als Öle können säurefreie natürliche oder synthetische Öle verwendet werden, die bis etwa 300 °C thermisch beständig sind. Bevorzugt werden Siliconöle mit einer Viskosität bei 25 °C von 10 bis 1000 mm$^2$/s, insbesondere solche mit einer Viskosität von 10 bis 100 mm$^2$/s, die eine Imprägnierung ohne Erwärmen ermöglichen.

Beim Imprägnieren wird der gepreßte und erhärtete Reibwerkstoff in einem Ölbad in eine Vakuumkammer gelegt.

Unter vermindertem Druck wird die Luft aus den Poren des ölbedeckten Belages entfernt, so daß nach dem Belüften das Öl in die Poren eindringen kann. Das Imprägnieren kann durch die Aufgabe eines erhöhten Drucks noch beschleunigt werden.

Aus der JP-A 62 237 126 ist ein organisch gebundenes Reibmaterial bekannt, bei dem der mineralische Füllstoff vor der Herstellung des Belages mit 0,5 bis 15 % Siliconöl imprägniert wird. Der imprägnierte Füllstoff wird mit Fasern und einem hitzehärtbaren Harz gemischt und zu Reibbelägen verpreßt. Die Beläge haben einen verbesserten Widerstand gegen Abrieb und Korrosion. Das Siliconöl bei diesem bekannten Belag ist jedoch in dem vom Bindemittel umhüllten Füllstoff eingeschlossen und kann daher das Naßfading verursachende Eindringen von Wasser in die Makroporen eines porösen Belages nicht verhindern.

Bremsbeläge für Eisenbahnbremsen werden einmal nach dem Bremsentyp unterschieden und zum anderen nach ihrem Reibwerkstoff. Für die Klotzbremsen sind Bremssohlen aus Grauguß und organisch gebundene Bremssohlen üblich. Graugußsohlen haben keinen Reibwertabfall bei Nässe aber eine geringere Lebensdauer. Organisch gebundene Bremssohlen zeigen hingegen einen zum Teil erheblichen Reibwertabfall bei Nässe. Für Scheibenbremsen werden Sinterbeläge und organisch gebundene Beläge verwendet. Naßfading tritt bei beiden Belägen auf.

Reibbelagmischungen für organisch gebundene Beläge und Sohlen haben etwa folgende Zusammensetzung:

5 bis 35 Gew.-% Bindemittel 10 bis 60 Gew.-% mineralische Füllstoffe

5 bis 40 Gew.-% Schmierstoffe 10 bis 65 Gew.-% Metalle

und gegebenenfalls Härtungsbeschleuniger, Reibstützer und ähnliche Zusätze.

Als Bindemittel werden neben Phenol- und Epoxidharzen auch termperaturbeständige Kautschuke verwendet.

Mineralische Füllstoffe sind beispielsweise Baryt und Magnesiumoxid in Pulverform. Metalle können sowohl in Form von Pulvern als auch als Faser zugesetzt werden. Schmierstoffe sind vor allem Kohlenstoffpulver wie Graphit, Ruß und Koks. Die Beläge werden in üblicher Weise gepreßt und gehärtet.

Sinterbelagmischungen bestehen in der Regel aus:

74 bis 93 Gew.-% Metallpulvern

7 bis 21 Gew.-% festen Schmierstoffen und bis zu

5 Gew.-% mineralische Füllstoffen.

Die Gemische werden in üblicher Weise gepreßt, gesintert und gegebenenfalls nachverdichtet. Als Metallpulver werden Gemische aus Eisen, Chrom, Nickel, Mangan und Kupfer verwendet, denen teilweise auch niedriger schmelzende Metalle wie Blei und Zinn zur besseren Einbindung der mineralischen Füllstoffe und Schmierstoffe zugesetzt werden. Auch Aluminium enthaltende Metallpulver werden eingesetzt. Die festen Schmierstoffe sind meistens Kohlenstoffe wie Koks und Graphit. Als mineralische Füllstoffe sind Sand und Tonerde üblich.

Es sind ebenfalls Sinterbeläge bekannt, die von Metalloxidpulvern ausgehen und in reduzierender Atmosphäre gesintert werden.

Die Erfindung wird in den folgenden Beispielen näher erläutert:

Beispiel 1:

83,5 Gew.-Teile eines üblichen Gemisches aus Sintermetallpulvern, die als Hauptkomponente Eisen enthält werden mit 14,5 Gew.-Teilen Graphit und 2,0 Gew.-Teilen Quarzsand in einem Taumelmischer gemischt. Das so erhaltene Gemisch wird unter einem Druck von 400 MPa zu zylinderischen Formkörpern mit einem Durchmesser von 33 mm und einer Höhe von 22 mm verpreßt und unter Inertgas bei 980 °C gesintert. Die gesinterten Körper haben ein Porenvolumen von 30 %. Ein Teil der gesinterten Formkörper wird bei Umgebungstemperatur in einer Vakuumkammer mit einem Siliconöl imprägniert, das bei 25 °C eine Viskosität von 50 mm²/s hat. Anschließend werden die Probekörper 1 h gelagert, damit das überschüssige Öl abtropfen kann. Die Vergleichsmessungen zeigen, daß im Mittel 70 Vol.-% der Poren mit Siliconöl gefüllt sind. Die so hergestellten imprägnierten, gesinterten Formkörper werden in die ringförmigen Behälter eines Reibbelagträgers für Eisenbahnscheibenbremsen entsprechend der EP 0 106 782 B1 eingepreßt.

Die fertigen Beläge werden auf einem Prüfstand gemäß der UIC-Prüfnorm 541-3 VE nach folgendem Prüfprogramm getestet, um die Reibwerte $\mu$ zu ermitteln.

| Trockenbremsung Nr. | Naßbremsung Nr. | Geschwindigkeit km/h | Anpreßdruck N/cm² |
|---|---|---|---|
| 1 | 17 | 200 | 20 |
| 2 | 18 | 160 | 20 |
| 3 | 19 | 120 | 20 |
| 4 | 20 | 80 | 20 |
| 5 | 21 | 80 | 10 |
| 6 | 22 | 120 | 10 |
| 7 | 23 | 160 | 10 |
| 8 | 24 | 200 | 10 |
| 9 | 25 | 200 | 30 |
| 10 | 26 | 160 | 30 |
| 11 | 27 | 120 | 30 |
| 12 | 28 | 80 | 30 |
| 13 | 29 | 220 | 10 |
| 14 | 30 | 250 | 10 |
| 15 | 31 | 220 | 20 |
| 16 | 32 | 250 | 20 |

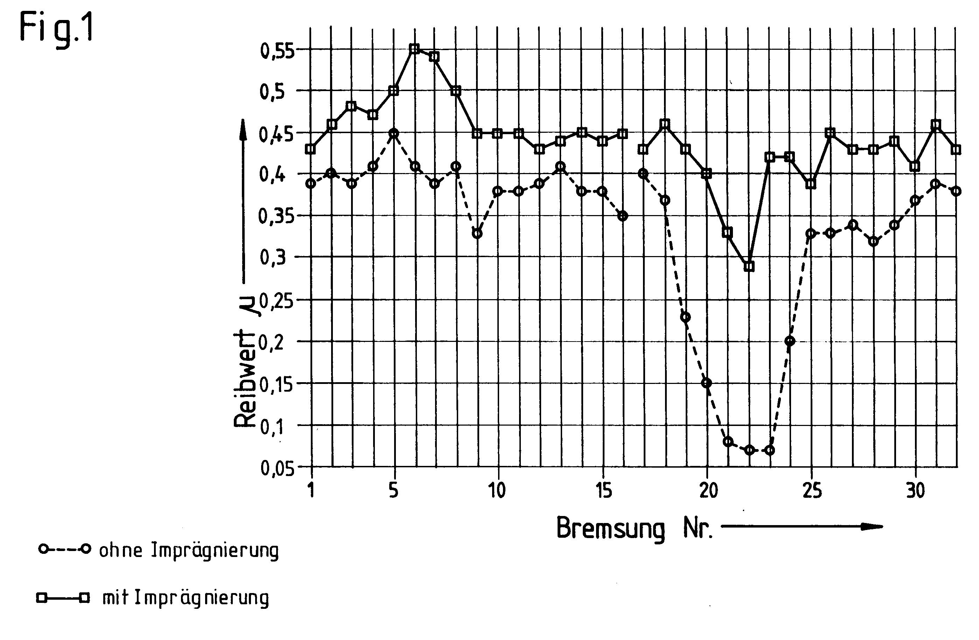

Die Naßbremsungen wurden mit der vorgeschriebenen Wassermenge von 25 l/h durchgeführt. Zum Vergleich wurden entsprechende Reibbeläge mit nicht imprägnierten Sinterkörpern hergestellt und nach dem gleichen Prüfprogramm getestet. Die Ergebnisse sind in der Figur 1 gegenübergestellt.

Bei den herkömmlichen Belägen ohne Ölimprägnierung liegen die Meßwerte für die Trockenbremsung im Bereich der in der UIC-Prüfnorm angegebenen Grenzen. Bei der Naßbremsung fallen die Reibwerte bei geringerem Anpreßdruck hingegen bis auf $\mu$ = 0,07 und liegen damit erheblich unter dem vorgeschriebenen Mindestwert von $\mu$ = 0,25. Bei den ölimprägnierten Reibbelägen fällt der Reibwert der Naßbremsung auch bei geringem Anpreßdruck nicht unter $\mu$ = 0,29.

3

Überraschend ist, daß bei den ölimprägnierten Sinterbelägen nach der Erfindung der Reibwert auch bei der Trockenbremsung gegenüber dem der nicht imprägnierten Beläge höher liegt. Die Imprägnierung bildet also beim Bremsen keinen Schmierfilm aus, der die Trockenreibung negativ beeinflußt.

Wenn die Sinterbeläge nachverdichtet werden sollen, so geschieht dies bei den Belägen nach der Erfindung vorzugsweise nach der Imprägnierung.

Beispiel 2:

Ein Gemisch aus

14,4 Gew.-Teilen mineralischen Füllstoffen
48,1 Gew.-Teilen Metallfasern und -pulver
24,1 Gew.-Teilen Schmierstoffen und Reibstützern
13,0 Gew.-Teilen Bindemittel und
0,4 Gew.-Teilen Vulkanisationsmittel

wird in üblicher Weise zu Eisenbahnscheibenbremsbelägen in den in der Anlage 1a der UIC-Prüfnorm 541-3 VE angegebenen Abmessungen verpreßt. Die so hergestellten Beläge haben ein Porenvolumen von etwa 20 %. Vier dieser Beläge werden bei Raumtemperatur in einer Vakuumkammer mit einem Siliconöl imprägniert, das bei 25 °C eine Viskosität von 50 mm$^2$/s hat. Anschließend werden diese Beläge 1 h gelagert, damit das überschüssige Öl abtropfen kann. die Vergleichsmessungen zeigen, daß im Mittel etwa 60 Vol.-% der Poren mit Siliconöl gefüllt sind.

Die Scheibenbremsbeläge werden auf dem Prüfstand nach der UIC-Prüfnorm 541-3 VE entsprechend dem Prüfprogramm Nr. 3 (Anlage 3c) geprüft, um die Reibwerte $\mu$ zu ermitteln.

| Trocken-bremsung Nr. | | Naß-bremsung Nr. | | | Geschwin-digkeit km/h | Anpreß-druck N/cm² |
|---|---|---|---|---|---|---|
| 1 | 10 | 19 | 28 | 37 | 80 | 40 |
| 2 | 11 | 20 | 29 | 38 | 120 | 20 |
| 3 | 12 | 21 | 30 | 39 | 120 | 40 |
| 4 | 13 | 22 | 31 | 40 | 160 | 40 |
| 5 | 14 | 23 | 32 | 41 | 200 | 40 |
| 6 | 15 | 24 | 33 | 42 | 80 | 55 |
| 7 | 16 | 25 | 34 | 43 | 120 | 55 |
| 8 | 17 | 26 | 35 | 44 | 160 | 55 |
| 9 | 18 | 27 | 36 | 45 | 200 | 55 |

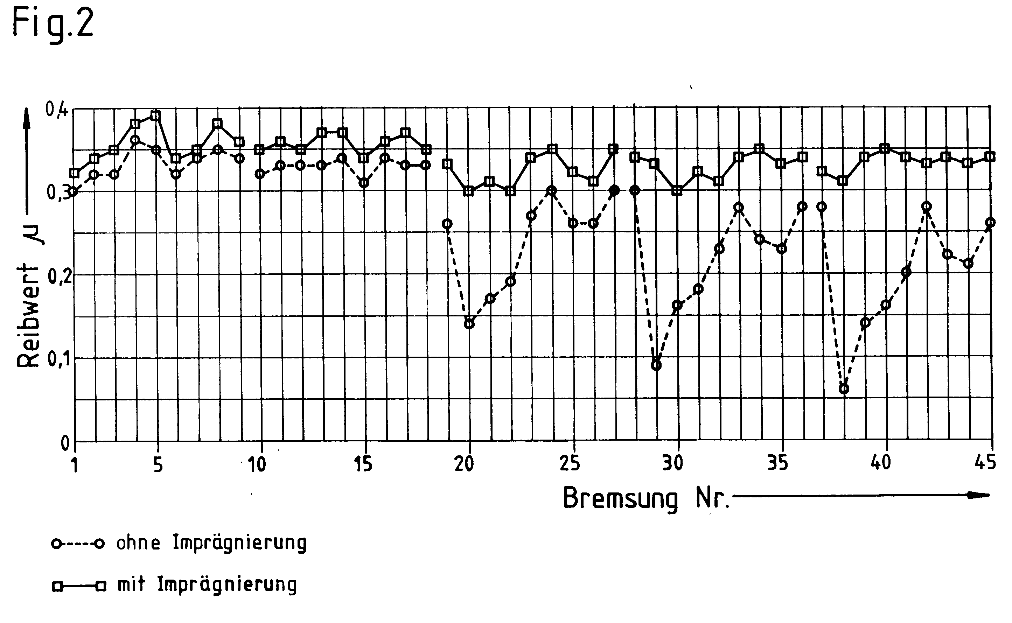

Die Ergebnisse der Messungen an imprägnierten und nicht imprägnierten Scheibenbremsbelägen sind in der Figur 2 gegenübergestellt.

Bei den herkömmlichen Belägen ohne Ölimprägnierung liegen die Meßwerte für die Trockenbremsung im Bereich der in der UIC-Prüfnorm angegebenen Grenzen. Bei der Naßbremsung hingegen fallen die Reibwerte vor allem bei geringerem Anpreßdruck teilweise erheblich unter den vorgeschriebenen Mindestwert von $\mu$ = 0,25. Die imprägnierten Beläge zeigen auch bei der Naßbremsung nur eine geringe Schwankung der Reibwerte, die alle deutlich über dem geforderten Mindestwert liegen.

Bei der Trockenbremsung liegen die Reibwerte der imprägnierten Beläge ebenfalls über denen der nicht imprägnierten. Die Unterschiede sind aber geringer als bei den Sinterbelägen im Beispiel 1.

**Patentansprüche**

1. Eisenbahnbremsbelag, **dadurch gekennzeichnet**, daß der poröse Reibbelag mit einem wasserabweisenden, temperaturbeständigen Öl so imprägniert ist, daß 60 bis 90 Vol.-% der Poren mit Öl gefüllt sind.

2. Eisenbahnbremsbelag nach Anspruch 1, **dadurch gekennzeichnet**, daß der poröse Reibbelag mit einem Siliconöl imprägniert ist.

3. Eisenbahnbremsbelag nach Anspruch 2, **dadurch gekennzeichnet**, daß das Siliconöl bei 25 °C eine Viskosität von 10 bis 1000 mm$^2$/s vorzugsweise eine Viskosität von 10 bis 100 mm$^2$/s hat.

4. Eisenbahnbremsbelag nach einem der Ansprüche 1 bis 3, **dadurch gekennzeichnet**, daß der Reibbelag organisch gebunden ist.

5. Eisenbahnbremsbelag nach einem der Ansprüche 1 bis 3, **dadurch gekennzeichnet**, daß der Reibbelag ein Sinterbelag ist, der nach dem Imprägnieren gegebenenfalls nachverdichtet ist.

6. Eisenbahnbremsbelag nach einem der Ansprüche 1 bis 4, **dadurch gekennzeichnet**, daß der Reibbelag ein Sinterbelag ist.

7. Eisenbahnbremsbelag nach Anspruch 6, **dadurch gekennzeichnet**, daß er nach dem Imprägnieren nachverdichtet ist.

8. Verfahren zur Herstellung eines Eisenbahnbremsbelages nach einem der Ansprüche 1 bis 7, **dadurch gekennzeichnet**, daß der in üblicher Weise durch Pressen und Erhitzen hergestellte Reibbelag im gegebenenfalls erwärmten Ölbad in einer Vakuumkammer mit Öl imprägniert wird, wobei der ölbedeckte Belag zunächst einem vermindertem und anschließend dem Atmosphärendruck oder einem erhöhten Druck ausgesetzt wird.

9. Verfahren nach Anspruch 8, **dadurch gekennzeichnet**, daß überschüssiges Öl aus dem Reibbelag entfernt wird, wobei 60 bis 90 Vol.-% der Poren mit dem Öl gefüllt bleiben.

**Claims**

1. A train brake lining, characterised in that the porous friction lining is impregnated with a water-repellent, thermally stable oil in that manner that 60 to 90 % of the pores are filled with oil.

2. A train brake lining according to claim 1, characterised in that the porous friction lining is impregnated with a silicone oil.

3. A train brake lining according to claim 2, characterised in that the silicone oil at 25 °C has a viscosity of 10 to 1000 mm$^2$/s, preferably a viscosity of 10 to 100 mm$^2$/s.

4. A train brake lining according to one of claims 1 to 3, characterised in that the friction lining is organically bonded.

5. A train brake lining according to one of claims 1 to 3, characterised in that the friction lining is a sintered lining which is redensified after the impregnation, if appropriate.

6. A train brake lining according to one of claims 1 to 4, characterised in that the friction lining is a sintered lining.

7. A train brake lining according to claim 6, characterised in that it is redensified after the impregnation.

8. A method of manufacturing a train brake lining according to one of claims 1 to 7, characterised in that the friction lining, manufactured in the conventional manner by pressing and heating, is impregnated with oil in an oil bath in a vacuum chamber, which oil bath may be heated if appropriate, wherein the oil-coated linings is initially exposed to reduced pressure and then to atmospheric pressure or raised pressure.

9. A method according to claim 8, characterised in that surplus oil is removed from the friction lining, whereas 60 to 90 % by volume of the pores remaining with the oil.

**Revendications**

1. Garniture de frein de chemins de fer, caractérisée en ce que la garniture de friction poreuse est imprégnée d'une huile hydrofuge, résistant à la température de telle manière que 60 à 90% en volume des pores soient remplis d'huile.

2. Garniture de frein de chemins de fer selon la revendication 1, caractérisée en ce que la garniture de friction poreuse est imprégnée d'une huile de silicone.

3. Garniture de frein de chemins de fer selon la revendication 2, caractérisée en ce que l'huile de silicone possède à 25°C une viscosité de 10 à 1000 mm$^2$/s, de préférence une viscosité de 10 à 100 mm$^2$/s.

4. Garniture de frein de chemins de fer selon l'une des revendications 1 à 3, caractérisée en ce que la garniture de friction est liée organiquement.

5. Garniture de frein de chemins de fer selon l'une des revendications 1 à 3, caractérisée en ce que la garniture de friction est une garniture frittée qui est éventuellement recomprimée après l'imprégnation.

6. Garniture de frein de chemins de fer selon l'une des revendications 1 à 4, caractérisée en ce que la garniture de friction est une garniture fritté.

7. Garniture de frein de chemins de fer selon la revendication 6, caractérisée en ce qu'elle est recomprimée après l'imprégnation.

8. Procédé de fabrication d'une garniture de frein de chemins de fer selon l'une des revendications 1 à 7, caractérisé en ce que la garniture de friction réalisée de manière usuelle par pressage et chauffage est imprégnée d'huile dans le bain d'huile éventuellement chauffé dans une chambre à vide, moyennant quoi la garniture recouverte d'huile est tout d'abord soumise à une pression réduite et ensuite à la pression atmosphérique ou à une pression accrue.

9. Procédé selon la revendication 8, caractérisé en ce que l'huile excédentaire est éliminée de la garniture de friction, moyennant quoi 60 à 90% en vol. des pores restent remplis d'huile.

Fig.1

o----o ohne Imprägnierung

□——□ mit Imprägnierung

# Fig.2

o----o  ohne Imprägnierung

□——□  mit Imprägnierung

EP 0 557 605 B1